# EUROPÄISCHE PATENTSCHRIFT

(11) **EP 1 225 069 B1**
(45) Veröffentlichungstag und Bekanntmachung des Hinweises auf die Patenterteilung: **28.07.2004**
(21) Anmeldenummer: 01129574.8
(22) Anmeldetag: 12.12.2001
(51) Int. Cl.: B60D 1/54, B60D 1/06, B60D 1/62

(54) **Antriebssteuerung für eine Antriebsmotoranordnung einer Anhängerkupplung**
Drive control for a trailer hitch drive motor assembly
Commande d'entraînement pour un assemblage motrice d'entraînement d'un attelage de remorque

(30) Priorität: 23.01.2001 DE 10104188
(43) Veröffentlichungstag der Anmeldung: 24.07.2002
(73) Patentinhaber: FAC Frank Abels Consulting & Technology GmbH, 29633 Munster (DE)
(72) Erfinder: Abels, Frank O., 29633 Munster (DE); Berger, Stephan, 21423 Winsen (DE)
(74) Vertreter: Reimold, Otto, Dr. Dipl.-Phys.

(56) Entgegenhaltungen:
- EP-A- 1 002 671
- EP-A- 1 084 872
- EP-A- 1 160 104
- WO-A-97/36760

## Beschreibung

Die Erfindung betrifft eine Antriebssteuerung für eine Antriebsmotoranordnung einer Anhängerkupplung mit einer Zugpartie zum Ankuppeln eines Anhängers an ein Zugfahrzeug, mit Steuermitteln zum Steuern der Antriebsmotoranordnung derart, dass die Zugpartie durch die Antriebsmotoranordnung in zumindest eine vorgebbare Zugpartie-Stellung bewegbar ist.

Bei der Zugpartie handelt es sich beispielsweise um ein auf einem Kupplungsarm angeordnetes Kopfstück, das in einer Gebrauchsstellung, die eine vorgebbare Zugpartie-Stellung bildet, hinter das Zugfahrzeug zum Anhänger hin vorsteht, so dass dieser angekuppelt werden kann. In einer Ruhestellung, die ebenfalls eine vorgebbare Zugpartie-Stellung sein kann, befindet sich die Zugpartie z.B. unterhalb und/oder vor einem zugfahrzeugseitigen Stoßfänger, so dass sie bei NichtGebrauch optisch nicht störend ist.

Die Bedienung der Anhängerkupplung gestaltet sich sehr einfach, weil lediglich ein Schalter zum Schalten des Antriebsmotors betätigt werden muss. Eine Anhängerkupplung mit einer derartigen Antriebssteuerung ist beispielsweise aus der WO 97/36760 bekannt. Bei der dort offenbarten Antriebssteuerung wird ein Schaltelement, beispielsweise ein Tastschalter, betätigt, worauf die Zugpartie durch einen Antriebsmotor in eine Gebrauchsstellung oder eine Ruhestellung bewegt wird.

In Gebrauchsstellung wird die Zugpartie bei der WO 97/36760 durch eine Verriegelungsvorrichtung fixiert. Allerdings ist eine solche Verriegelungsvorrichtung aufwändig und beim Betrieb der Anhängerkupplung störungsanfällig. Beispielsweise muss die Verriegelungsvorrichtung bei jedem Bewegen der Zugpartie aus der Gebrauchsstellung in Richtung Ruhestellung entriegelt werden, was bei manueller Betätigung unbequem und bei einer Betätigung mittels automatischer Schaltelemente, beispielsweise mittels eines elektromagnetischen Antriebs, weitere störanfällige und teuere Bauteile bedingt.

Sieht man jedoch keine Verriegelungsvorrichtung vor, so droht selbst dann, wenn zwischen der Antriebsmotoranordnung und der Zugpartie ein selbsthemmendes Getriebe vorgesehen ist, eine sozusagen schleichende Verstellung der Zugpartie beim Fahrbetrieb, so dass ein sicheres Halten der Zugpartie in der Gebrauchsstellung nicht gewährleistet ist. Aber auch in der Ruhestellung ist es nicht erwünscht, dass die Zugpartie sich verstellt, auch wenn dadurch nicht unbedingt sicherheitsrelevante Probleme auftreten.

Es ist daher Aufgabe der Erfindung, eine Antriebssteuerung der eingangs genannten Art derart weiterzubilden, dass die Zugpartie zuverlässig in der mindestens einen vorgebbaren Zugpartie-Stellung gehalten wird.

Zur Lösung der Aufgabe ist bei der eingangs genannten Antriebssteuerung vorgesehen, dass die Steuermittel zur Kompensation eines unbeabsichtigten Verstellens der Zugpartie zu einem automatischen, in zeitlichen Intervallen wiederholten Ansteuern der Antriebsmotoranordnung zu einer zu der mindestens einen vorgebbaren Zugpartie-Stellung gerichteten Bewegungsrichtung ausgestaltet sind.

Zur Lösung der Aufgabe sind ferner vorgesehen: eine Anhängerkupplung mit einer erfindungsgemäßen Antriebssteuerung sowie ein Kraftfahrzeug, das mit einer vorgenannten Anhängerkupplung ausgestattet ist.

Der Erfindung liegt dabei der Gedanke zugrunde, dass durch das automatische, in zeitlichen Intervallen wiederholte Ansteuern, die mindestens eine vorgebbare Zugpartie-Stellung immer wieder angefahren wird, so dass ein gegebenenfalls während der Intervalle eingetretenes Verstellen der Zugpartie, das beispielsweise durch Vibrationen und Stöße beim Fahrbetrieb bedingt ist, wieder ausgeglichen wird. Eine mechanische Verriegelung der Zugpartie ist daher nicht erforderlich, so dass eine mit der erfindungsgemäßen Antriebssteuerung ausgestaltete Anhängerkupplung bei großer Zuverlässigkeit eine einfache und robuste Bauart aufweist.

Es versteht sich allerdings, dass bei der Antriebsmotoranordnung und/oder der Anhängerkupplung zusätzliche Sicherungsund/oder Verriegelungsmittel vorgesehen sein können, die beispielsweise nicht erfindungsgemäß gegen unbeabsichtigtes Verstellen gesicherten Zugpartie-Stellungen zugeordnet sind und/oder die als zusätzliche Sicherheitsmaßnahme dienen. Beispielsweise kann eine Zugpartie-Gebrauchsstellung durch zusätzliche Verriegelungsmittel gesichert sein, während bei einer Ruhestellung keine zusätzliche Sicherheitsmaßnahmen vorgesehen sind.

Weitere vorteilhafte Ausgestaltungen der Erfindung finden sich in den abhängigen Ansprüchen sowie in der Beschreibung.

Die mindestens eine vorgebbare Zugpartie-Stellung umfasst vorzugsweise eine Ruhestellung und/oder eine Gebrauchsstellung der Zugpartie. Prinzipiell können auch sonstige Zugpartie-Stellungen, beispielsweise zwischen einer Ruhestellung und einer Gebrauchsstellung vorgesehene Stellungen durch das wiederholte Ansteuern der Antriebsmotoranordnung zuverlässig eingehalten werden.

In einer bevorzugten Variante der Antriebssteuerung sind die Steuermittel derart ausgestaltet, dass sie bei dem wiederholten Ansteuern der Antriebsmotoranordnung diese jeweils solange einschalten können, bis die Zugpartie die mindestens eine vorgebbare Zugpartie-Stellung erreicht hat. Dadurch lässt sich der Energiebedarf der gesamten Anordnung gering halten, da sich die Zugpartie üblicherweise nicht oder nur geringfügig verstellt und somit die Antriebsmotoranordnung keine Energie bzw. nur Energie zur Kompensation eines kurzen verstellwegs verbraucht. Wenn keine Verstellung der Zugpartie zu kompensieren ist, wird die Antriebsmotoranordnung bei der in zeitlichen Intervallen wiederholten Ansteuerung unter Umständen gar nicht eingeschaltet, sondern es wird von der Antriebssteuerung lediglich überprüft, ob sich die Zugpartie noch in der mindestens einen vorgebbaren Zugpartie-Stellung befindet.

Zum jeweiligen Abschalten der Antriebsmotoranordnung bei Erreichen und/oder Innehaben der mindestens einen vorgebbaren Zugpartie-Stellung sind der Antriebssteuerung zweckmäßigerweise Erfassungsmittel zum Erfassen, wenn die Zugpartie die mindestens eine vorgebbare Zugpartie-Stellung erreicht hat, zugeordnet. Die Erfassungsmittel können auch einen Bestandteil der Antriebssteuerung bilden.

Bei einer besonders bevorzugten Variante der Erfindung sind die Steuermittel zu einem Einschalten der Antriebsmotoranordnung jeweils für eine vorbestimmte Mindest-Einschaltzeitspanne bei dem wiederholten Ansteuern der Antriebsmotoranordnung ausgestaltet. Die Antriebsmotoranordnung wird in dieser Ausführungsform bei dem wiederholten Ansteuern zumindest kurzzeitig eingeschaltet, so dass die Zugpartie beispielsweise gegen einen Anschlag bewegt wird. Somit ist auf jeden Fall sichergestellt, dass die Zugpartie in die mindestens eine vorgebbare Zugpartie-Stellung bewegt wird, auch wenn beispielsweise bei den Erfassungsmitteln eine Störung auftritt, bei der nicht mehr zuverlässig erfasst werden kann, dass sich die Zugpartie in der vorgebbaren Zugpartie-Stellung befindet.

Die zeitlichen Intervalle können bei der Antriebssteuerung prinzipiell auf einen definierten Wert, beispielsweise auf eine Minute oder eine halbe Minute, eingestellt sein, was sich in der Praxis als eine geeignete Lösung erwiesen hat. Es ist jedoch auch möglich, dass den Steuermitteln die Länge der zeitlichen Intervalle vorgebbar ist. Dies kann durch einen Bediener erfolgen oder durch eine gegebenenfalls in die Antriebssteuerung integrierte Vorgabeeinrichtung, die z.B. die Belastung der Zugpartie durch einen Anhänger und/oder beim Fahrbetrieb auftretende Stöße und Vibrationen erfasst.

Das automatische, in zeitlichen Intervallen wiederholte Ansteuern der Antriebsmotoranordnung kann auf verschiedene Weise gestartet werden:

Zweckmäßigerweise ist den Steuermitteln das automatische, in zeitlichen Intervallen wiederholte Ansteuern der Antriebsmotoranordnung vorgebbar, insbesondere durch einen Befehl für die Antriebssteuerung, die Zugpartie in die mindestens eine vorgebare Zugpartie-Stellung zu bewegen. Wenn beispielsweise ein Bediener der Antriebssteuerung vorgibt, die Zugpartie in die vorgebbare Zugpartie-Stellung zu verfahren, beispielsweise in die Gebrauchsstellung zu bringen, kann im Zusammenhang mit dieser Bedienhandlung das wiederholte Ansteuern der Antriebsmotoranordnung gestartet werden.

In einer weiteren, auch in Kombination mit der obigen Ausgestaltung der Antriebssteuerung möglichen Variante ist vorzugsweise vorgesehen, dass die Steuermittel derart ausgestaltet sind, dass sie mit dem wiederholten Ansteuern der Antriebsmotoranordnung nach einer vorbestimmten Zeitspanne nach dem erstmaligen Erreichen der mindestens einen vorgebbaren Zugpartie-Stellung beginnen können. Solange die Zugpartie die vorgebbare Zugpartie-Stellung noch nicht erstmalig erreicht hat, wird mit dem wiederholten Ansteuern noch nicht begonnen. Dies erweist sich beispielsweise dann als sinnvoll, wenn ein Hindernis auf der Bewegungsbahn der Zugpartie zu der vorgebbaren Zugpartie-Stellung verhindert, dass diese überhaupt erreicht wird.

Vorzugsweise sind die Steuermittel derart ausgestaltet, dass sie zumindest nach dem erstmaligen Erreichen der mindestens einen vorgebbaren Zugpartie-Stellung die Antriebsmotoranordnung für eine vorbestimmte Mindest-Einschaltzeitspanne einschalten können. Die Antriebssteuerung bewegt dabei zunächst die Zugpartie beispielsweise auf einen Bediener-Befehl hin in die vorgebbare Zugpartie-Stellung und setzt dann sozusagen mindestens noch einmal nach und schaltet dabei die Antriebsmotoranordnung für eine vorbestimmte Mindest-Einschaltzeitspanne ein, so dass die Zugpartie sicher die vorgebbare Zugpartie-Stellung erreicht. Auf diese Weise wird ein gegebenenfalls beim ersten Bewegen der Zugpartie in die gewünschte Zugpartie-Stellung noch verbleibendes Spiel kompensiert.

Zweckmäßigerweise ist die Antriebssteuerung für eine solche Anhängerkupplung vorgesehen, bei der die mindestens eine vorgebbare Zugpartie-Stellung durch mindestens einen Anschlag definiert ist. Bei dieser besonders bevorzugten Variante erweist sich insbesondere das wiederholte Einschalten der Antriebsmotoranordnung jeweils für eine vorbestimmte Mindest-Einschaltzeitspanne als vorteilhaft. Prinzipiell könnte die vorgebbare Zugpartie-Stellung jedoch auch eine beliebige sonstige, gegebenenfalls ohne einen Anschlag definierte Stellung sein.

In einer bevorzugten Variante ist vorgesehen, dass die Erfassungsmittel zu einem Erfassen ausgestaltet sind, ob die Zugpartie den mindestens einen Anschlag erreicht hat. Dies kann sehr einfach beispielsweise durch einen elektrischen EndSchalter oder eine Motorstromerfassung für einen elektrischen Antriebsmotor der Antriebsmotoranordnung realisiert werden, die den bei Erreichen des Anschlags ansteigenden Motorstrom erkennt.

Sowohl bei einer Variante, bei der die mindestens eine vorgebbare Zugpartie-Stellung durch einen Anschlag definiert ist, als auch dann, wenn kein Anschlag vorgesehen ist, weisen die Erfassungsmittel zweckmäßigerweise eine Sensoranordnung zum Erfassen der mindestens einen Zugpartie-Stellung auf. Diese enthält vorzugsweise mindestens einen elektro-mechanischen Schalter und/oder induktiven Sensor und/oder kapazitiven Sensor und/oder Reed-Kontakt und/oder eine Lichtschranke und/oder Drehzahlerfassungsmittel.

Es ist in einer bevorzugten Variante auch möglich, dass die Erfassungsmittel zur Erfassung mindestens eines Motorstroms ausgestaltet sind, der zumindest einen Antriebsmotor der Antriebsmotoranordnung beim Erreichen der mindestens einen vorgebbaren Zugpartie-Stellung durchfließt. Hierbei sind keine möglicherweise schädlichen Umwelteinflüssen ausgesetzte Sensoren erforderlich, sondern lediglich Bauteile, die beispielsweise im Innern eines Kraftfahrzeuges oder in einem der Anhängerkupplung zugeordneten Gehäuse geschützt untergebracht werden können.

Bei einer weiteren zweckmäßigen Variante ist vorgesehen, dass die Erfassungsmittel zu einer Erfassung, ob mindestens ein der Anhängerkupplung zugeordneter elektrischer Versorgerkontakt durch den Anhänger genutzt wird, ausgestaltet sind. Über den Versorgerkontakt, der im Allgemeinen als eine zugfahrzeugseitige Steckbuchse ausgeführt ist, wird ein angekuppelter Anhänger vom Zugfahrzeug elektrisch versorgt, so dass beispielsweise Leuchtmittel des Anhängers, also Bremsleuchten, Blinklichter, Rückleuchten etc., vom Zugfahrzeug aus ansteuerbar sind. Aus der Nutzung des Versorgerkontakts kann die Antriebssteuerung eine Nutzung der Zugpartie herleiten. In diesem Zusammenhang ergeben sich die folgenden vorteilhaften Varianten der erfindungsgemäßen Antriebssteuerung:

Die Steuermittel sind zweckmäßigerweise derart ausgestaltet, dass eine Ansteuerung des mindestens einen Antriebsmotors zu einer die mindestens eine vorgebbare Zugpartie-Stellung verlassenden Bewegung der Zugpartie verhinderbar ist, wenn die Erfassungsmittel eine Nutzung des mindestens einen elektrischen Versorgerkontakts durch den Anhänger melden. Somit wird die Zugpartie beispielsweise in Gebrauchsstellung zuverlässig gehalten, solange der Versorgerkontakt durch den Anhänger genutzt wird. Dazu unterbrechen die Steuermittel beispielsweise elektrisch eine Steuerleitung, mit der die Antriebsmotoranordnung zu einer Bewegung der Zugpartie in die Ruhestellung angesteuert werden kann.

Es ist auch möglich, dass die Antriebssteuerung die Nutzung des elektrischen Versorgerkontakts, beispielsweise durch Einstecken eines anhängerseitigen Steckers in diesen, dahingehend auswertet, dass sie die Antriebsmotoranordnung zu einer Bewegung der Zugpartie in Richtung der Gebrauchsstellung ansteuert und/oder mit dem erfindungsgemäßen wiederholten Ansteuern der Antriebsmotoranordnung zu einer zur Gebrauchsstellung gerichteten Bewegungsrichtung beginnt.

Eine Nutzung des zugfahrzeugseitigen elektrischen Versorgerkontakts kann auf vielfältige Weise ermittelt werden. Dabei ist zum einen eine sensorlose Erfassung zweckmäßig, bei der die durch das elektrische Anschließen des Anhängers veränderten elektrischen Verhältnisse analysiert werden. Beispielsweise werden über den elektrischen Versorgerkontakt führende, durch Kontaktieren des Versorgerkontakts geschlossene und/oder geöffnete Stromkreise durch die Erfassungsmittel oder diesen zugeordnete Sensoren erfasst oder, sofern ein Steuerungsbus über den elektrischen Versorgerkontakt führt, wird das Verbundensein eines anhängerseitigen Busteilnehmers mit dem Steuerungsbus ermittelt. Zum anderen kann vorteilhaft auch mittels einer Sensoranordnung und/oder einer Schalteranordnung erfasst werden, ob der elektrische Versorgerkontakt durch den Anhänger genutzt wird. Zweckmäßigerweise kommen zum elektro-mechanischen und/oder optischen und/oder kapazitiven und/oder induktiven Erfassen geeignete Schalter und/oder Sensoren in Betracht. Prinzipiell sind auch beliebige Kombinationen sensorloser und sensorischer Erfassung möglich.

Je nach Ausgestaltung der Anhängerkupplung sind in der Antriebsmotoranordnung einer oder mehrere Antriebsmotoren vorgesehen. Die Steuermittel sind daher vorteilhaft zu einem Einschalten zumindest eines Antriebsmotors der Antriebsmotoranordnung und/oder zu einem sequentiellen und/oder synchronen Einschalten mehrerer Antriebsmotoren der Antriebsmotoranordnung bei dem wiederholten Ansteuern der Antriebsmotoranordnung zu der mindestens einen vorgebbaren Zugpartie-Stellung hin ausgestaltet.

Bei der Antriebssteuerung sind zahlreiche Ausführungsvarianten möglich: sie kann vorteilhaft eine der Antriebsmotoranordnung und/oder der Anhängerkupplung zugeordnete Antriebssteuerung sein, die z.B. bei der Anhängerkupplung angeordnet und/oder in die Antriebsmotoranordnung integriert ist. Es ist vorteilhaft auch möglich, dass die Antriebssteuerung als ein Programm-Modul ausgebildet ist und Programmcode aufweist, der durch eine zur Steuerung der Antriebsmotoranordnung und/oder der Anhängerkupplung vorgesehene Prozessoranordnung ausgeführt werden kann. Das jeweilige Antriebssteuerungs-Programm-Modul kann beispielsweise auch durch eine im Zugfahrzeug vorgesehene (Zentral-)Steuerung ausgeführt werden. Diese könnte z.B. zur Steuerung und Überwachung weiterer zugfahrzeugseitiger Funktionen vorgesehen sein, beispielsweise zur Steuerung und Überwachung von Heckleuchten, Fensterhebern und dergleichen.

Bei der Antriebsmotoranordnung sind vorzugsweise Blockiermittel vorgesehen, insbesondere ein selbsthemmendes Getriebe, zum Verhindern einer Bewegung der Zugpartie in Richtung aus der mindestens einen vorgebbaren Zugpartie-Stellung bei nicht aktivierter Antriebsmotoranordnung.

Im Folgenden werden die Erfindung und ihre Vorteile anhand eines Ausführungsbeispiels erläutert. Es zeigen:
- Figur 1: schematisch eine an einem Zugfahrzeug 9 angeordnete Anhängerkupplung 10 mit einer Steuermittel 11 aufweisenden Antriebssteuerung 8 und mit Erfassungsmitteln 12, sowie einen an die Anhängerkupplung 10 angekuppelten Anhänger 13, und
- Figur 2: ein Ablaufdiagramm für die Antriebssteuerung 8 aus Figur 1.

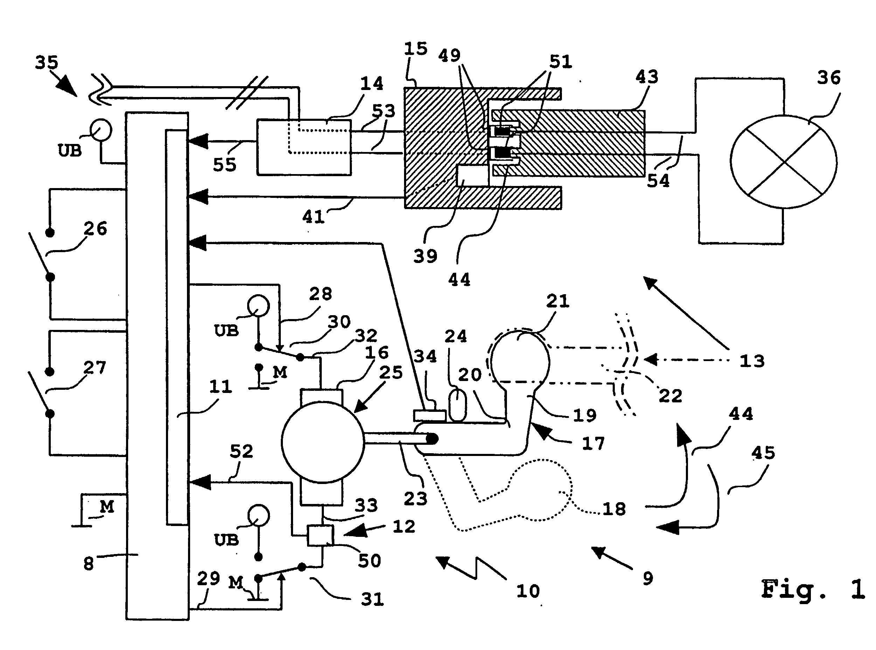

In Figur 1 ist schematisch eine Anhängerkupplung 10 zum Ankuppeln eines Anhängers 13 an ein Zugfahrzeug 9 gezeigt. Die Anhängerkupplung 10 weist eine Antriebsmotoranordnung 25 mit einem Antriebsmotor 16 auf, der im Ausführungsbeispiel ein zum Bewegen einer Zugpartie 17 zwischen einer gestrichelt angedeuteten Ruhestellung 18 und einer Gebrauchsstellung 19 vorgesehener elektrischer Antrieb ist, die für die Zugpartie 17 vorgebbare Zugpartie-Stellungen sind.

In der Ruhestellung 18 befindet sich die Zugpartie 17 entgegen der schematischen Darstellung in der Zeichnung beispielsweise in einem Bereich in Fahrtrichtung vor dem hinteren Zugfahrzeug-Ende unterhalb des Zugfahrzeugs 9 und/oder vor einem nicht dargestellten Stoßfänger des Zugfahrzeugs 9 oder in einer sonstigen, bei nicht angekuppeltem Anhänger 13 optisch nicht störenden Position. Die Zugpartie 17 besteht vorliegend aus einem Kupplungsarm 20 und einem balligen oder kugeligen Kopfstück 21, auf dem im gezeigten Zustand, der Gebrauchsstellung 19, eine Anhängepartie 22 des Anhängers 13 aufliegt.

Der Antriebsmotor 16 treibt über ein in Figur 1 lediglich schematisch angedeutetes Getriebe 23 die Zugpartie 17 an und bewegt diese dabei zwischen der Ruhestellung 18 und der Gebrauchsstellung 19. In der Gebrauchsstellung 19 liegt die Zugpartie 17 vorliegend an einem Anschlag 24 an, wobei dieser nicht unbedingt erforderlich ist.

Das Getriebe 23 ist vorliegend ein selbsthemmendes Getriebe, beispielsweise ein Schneckengetriebe. Das Getriebe 23 verhindert bei stromlos geschaltetem und somit nahezu kein Drehmoment auf das Getriebe 23 ausübendem Schwenk-Antriebsmotor 16, dass die Zugpartie 17 nennenswert verstellt werden kann. Allerdings ist durch die auf dieser lastende Anhängepartie 22 oder durch Vibrationen des Zugfahrzeugs 9 im Fahrbetrieb ein geringfügiges, unbeabsichtigtes Verstellen der Zugpartie 17 nicht auszuschließen. Dies spielt in Bezug auf die Ruhestellung 18 unter Umständen keine wesentliche Rolle, wobei auch in dieser ein unbeabsichtigtes Verstellen unerwünscht sein kann. In Bezug auf die Gebrauchsstellung 19, insbesondere bei angekuppeltem Anhänger 13 können jedoch beträchtliche Sicherheitsrisiken entstehen.

Der Antriebsmotor 16 wird durch eine Antriebssteuerung 8 gesteuert, die beispielsweise eine Mikroprozessorsteuerung oder eine sonstige analoge und/oder digitale Logikschaltung ist. Die Antriebssteuerung 8 kann über Schalter 26, 27 Befehle zum Bewegen der Zugpartie 17 in Ruhestellung 18 bzw. Gebrauchsstellung 19 erhalten. Über Steuerleitungen 28, 29 steuert die Antriebssteuerung 8 dann Schalter 30, 31 an, über die Versorgungsanschlüsse 32, 33 des Antriebsmotors 16 mit einer von einem Bordnetz 35 des Zugfahrzeugs 9 bereitgestellten Versorgungsspannung UB oder einem Massepotential M verbunden werden können. Durch geeignetes Schalten der Schalter 30, 31 kann die Drehrichtung des Antriebsmotors 16 und somit die Bewegungsrichtung der Zugpartie 17 beeinflusst werden. Ferner kann der Antriebsmotor 16 auf diese Weise stromlos geschaltet werden, beispielsweise wenn die Zugpartie 17 die Gebrauchsstellung 19 erreicht oder gegen ein auf seiner Bewegungsbahn liegendes Hindernis stößt.

Die Baugruppen der mit der Versorgungsspannung UB und dem Massepotential M verbunden Antriebssteuerung 8 sind aus Gründen der Vereinfachung nicht gezeigt. Beispielsweise kann die Antriebssteuerung 8 durch einen ASIC-Baustein (Application Specific Integrated Circuit) realisiert sein oder ein sogenanntes programmierbares logisches Feld enthalten, z.B. ein sogenanntes (Field) Programmable Logic Array ((F)PLA) oder ein sogenanntes (Field) Programmable Gate Array ((F)PGA). Die Antriebssteuerung 8 kann z.B. über einen nicht dargestellten Bus, z.B. einen CAN-Bus (CAN = Controller Area Network), an ein nicht gezeigtes Steuerungsnetz des Zugfahrzeugs 9 angeschlossen sein und auf diesem Wege Befehle erhalten, beispielsweise zum Bewegen der Zugpartie 17. Ferner kann die Antriebssteuerung 8 auch weitere Funktionen erfüllen, beispielsweise durch die Antriebsmotoranordnung 25 fließende Ströme überwachen und/oder elektrische Sicherheitsfunktionen leisten, z.B. eine elektrische Abschaltung von Funktionsbaugruppen bei Kurzschlüssen, Kabelbrüchen oder dergleichen durchführen.

Vorliegend ist die Antriebssteuerung 8 im Heck des Zugfahrzeugs 9 angeordnet, wobei sich die Schalter 26, 27 beispielsweise in dessen Kofferraum oder in dessen Armaturenbereich befinden. Die Antriebssteuerung 8 enthält Steuermittel 11, beispielsweise eine nicht dargestellte Logikschaltung und/oder einen Mikroprozessor einschließlich notwendiger Peripherie und/oder Schalter, im einfachsten Fall z.B. in Form von Relais, mit denen Schaltbefehle auf den Steuerleitungen 28, 29 gesendet werden können. Im Ausführungsbeispiel sind die Steuermittel 11 zudem dafür vorgesehen, zu einer unerwünschten Ansteuerung des Antriebsmotors 16 führende Schaltbefehle zu blockieren.

Es ist möglich, dass die Steuermittel 11 als ein in die Antriebssteuerung 8 einsetzbares Modul ausgeführt sind, z.B. in Form einer Elektronik-Platine. Die Steuermittel 11 können auch eine Programmfunktion oder ein Programm-Modul sein, das in ein Steuerungsprogramm der in diesem Fall als Mikroprozessorsteuerung ausgestalteten Antriebssteuerung 8 eingebunden ist und das Programmcode aufweist, der durch ein Steuermittel der Steuerung 8, beispielsweise einen Mikroprozessor, ausgeführt werden kann. Prinzipiell könnte auch die Antriebssteuerung 8 ein Programm-Modul sein, dessen Programmcode beispielsweise durch einen Prozessor einer Steuerung des Zugfahrzeugs 9 ausgeführt wird.

Der Antriebssteuerung 8 sind im Ausführungsbeispiel Erfassungsmittel 12 zugeordnet, die einerseits zum Ermitteln, ob die Zugpartie 17 die Gebrauchsstellung 19 erreicht hat, vorgesehen sind, andererseits zum Ermitteln, ob ein zur elektrischen Versorgung des Anhängers 13 vorgesehener elektrischer Versorgerkontakt 15 durch diesen genutzt wird. Die Erfassungsmittel 12 könnten ganz oder teilweise Bestandteile der Antriebssteuerung 8 bilden.

Die Erfassungsmittel 12 enthalten eine an der Anhängerkupplung 10 angeordnete Sensoranordnung 34, die der Antriebssteuerung 8 das Erreichen der Gebrauchsstellung 19 durch Zugpartie 17 meldet. Ferner ist dem Versorgerkontakt 15 eine Sensoranordnung 39 zugeordnet, die die Nutzung des Versorgerkontakts 15 als Meldesignal 41 an die Antriebssteuerung 8 meldet. Die Sensoranordnung 39 ist an dem Versorgerkontakt 15 angeordnet und wird von einem ein anhängerseitiges Kontaktmittel bildenden Stecker 43 betätigt. Die Sensoranordnung 39 erfasst, ob der Stecker 43 in den Versorgerkontakt 15 eingesteckt ist.

Die Sensoranordnungen 34, 39 enthalten beispielsweise einen elektro-mechanischen Schalter, eine Lichtschranke, einen Reed-Kontakt oder einen sonstigen optisch, induktiv oder kapazitiv erfassenden Sensor.

Als sensorlos arbeitende Komponenten enthalten die Erfassungsmittel 12 einerseits Motorstrom-Erfassungsmittel 50 zum Erfassen einer Information über mindestens einen die Antriebsmotoranordnung 25 betreffenden Motorstrom und andererseits Versorgerkontakt-Erfassungsmittel 14 zum Erfassen, ob ein zugfahrzeugseitiger und/oder anhängerseitiger Stromkreis durch das Ankuppeln des Anhängers 13 beeinflusst wird. Vorliegend erfassen die Versorgerkontakt-Erfassungsmittel 14, ob ein anhängerseitiger Verbraucher 36, beispielsweise eine Anhänger-Rückleuchte, über zugfahrzeug- bzw. anhängerseitige Leitungen 53, 54 und Kontakte 49, 51 mit dem zugfahrzeugseitigen Bordnetz 35 verbunden ist, und melden dies als Meldesignal 55 an die Antriebssteuerung 8. Diese leitet daraus eine Nutzung der Anhängerkupplung 10 durch den Anhänger 13 ab. Die Motorstrom-Erfassungsmittel 50 melden vorliegend die Höhe und/oder eine Grenzwertüberschreitung des den Antriebsmotor 16 durchfließenden Motorstroms als ein Meldesignal 52 an die Antriebssteuerung 8.

Die Motorstrom-Erfassungsmittel 50 und die Versorgerkontakt-Erfassungsmittel 14 enthalten beispielsweise einen in den jeweils zu erfassenden Stromkreis geschalteten Messwiderstand, einen sogenannten Shunt, sowie z.B. eine Differenzverstärkerschaltung mit einem Operationsverstärker, mit der eine an dem Messwiderstand abfallende Messspannung erfasst werden kann. Als Motorstrom-Erfassungsmittel 50 und Versorgerkontakt-Erfassungsmittel 14 jeweils geeignete Strom- und/oder Spannungserfassungsschaltungen, die gegebenenfalls zum Erfassen und Melden von Grenzwertüberschreitungen ausgestaltet sind, sind dem Fachmann bekannt.

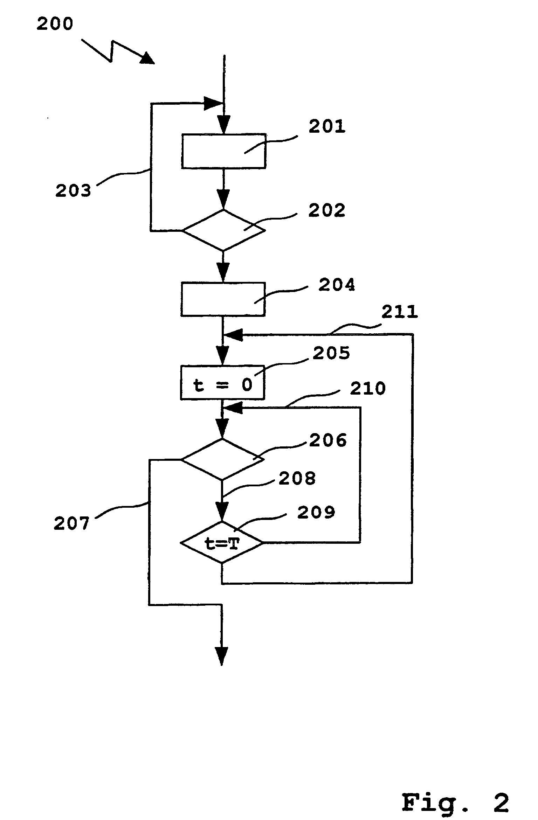

Ein beispielhaftes Bewegen der Zugpartie 17 von der Ruhestellung 18 in die Gebrauchsstellung 19 in einem Verfahren 200 wird anhand von Figur 2 erläutert:

Die Antriebssteuerung 8 erhält z.B. von dem Schalter 27 einen Befehl zum Bewegen der Zugpartie 17 in Gebrauchsstellung 19, worauf sie in einem Schritt 201 den Antriebsmotor 16 unter Betätigung der Schalter 30, 31 entsprechend ansteuert. In einem anschließenden Prüfschritt 202 überprüft die Antriebssteuerung 8, ob die Zugpartie 17 bereits die Gebrauchsstellung 19 erreicht hat. Dabei wertet die Antriebssteuerung 8 die von den Motorstrom-Erfassungsmitteln 50 und/oder der Sensoranordnung 34 gemeldeten Informationen aus. Solange dies nicht erfüllt ist, verzweigt das Verfahren 200 in einer Rückverzweigung 203 wieder zum Schritt 201.

Wenn die Zugpartie 17 an dem Anschlag 24 anliegt, steigt beispielsweise der den Antriebsmotor 16 durchfließende Motorstrom an. Diese Information melden die Motorstrom-Erfassungsmittel 50 der Antriebssteuerung 8. Diese ermittelt daraus, dass die Gebrauchsstellung 19 erreicht ist, und geht zu einem Schritt 204 über, in welchem sie den Antriebsmotor 16 ausschaltet.

In einem anschließenden Schritt 205 schaltet die Antriebssteuerung 8 den Antriebsmotor 16 für eine vorbestimmte Mindest-Einschaltzeitspanne Tmin ein. Somit wird sichergestellt, dass die Zugpartie 17 auf jeden Fall an dem Anschlag 24 anliegt, auch wenn beispielsweise der Sensor 34 möglicherweise ein zu frühzeitiges Abschalten des Antriebsmotors 16 beim erstmaligen Anfahren der Gebrauchsstellung 19 bewirkt hat.

Ferner initialisiert und startet die Antriebssteuerung 8 im Schritt 205 einen z.B. als Inkrementzähler ausgebildeten Intervall-Timer t auf einen Startwert, z.B. "0".

Es kann vorgesehen sein, dass die Antriebssteuerung 8 in dem Schritt 204 für eine vorbestimmte, vorzugsweise kurze Zeitspanne Twa von beispielsweise einer Sekunde wartet, bevor sie im Schritt 205 den Antriebsmotor 16 für eine vorbestimmte Mindest-Einschaltzeitspanne Tmin einschaltet.

In einem anschließenden Prüfschritt 206 überprüft die Antriebssteuerung 8, ob ein Befehl zum Bewegen der Zugpartie 17 in Richtung der Ruhestellung 18 gegeben worden ist, beispielsweise der Schalter 26 betätigt worden ist. Wenn dies der Fall ist, wird das Verfahren 200 - symbolisiert durch einen Ausgangspfeil 207 - beendet.

Ansonsten wird in einem Übergang 208 zu einem Prüfschritt 209 weitergegangen, in welchem die Antriebssteuerung 8 überprüft, ob der Intervall-Timer t einen vorbestimmten Intervallwert T, z.B. 30 Sekunden, erreicht hat. Ist dies noch nicht der Fall, verzweigt die Antriebssteuerung 8 in einer Rückschleife 210 wieder zum Prüfschritt 206. Bei Erreichen des Intervallwerts T jedoch geht die Antriebssteuerung 8 in einem Rücksprung 211 wieder zum Schritt 205, in welchem sie den Antriebsmotor 16 für die Mindest-Einschaltzeitspanne Tmin in einer zur Gebrauchsstellung 19 gerichteten Bewegungsrichtung 44 einschaltet und den Intervall-Timer t neu startet. Somit wird ein eventuell während des Intervalls T aufgetretenes, unbeabsichtigtes Verstellen der Zugpartie 17 kompensiert.

Es ist prinzipiell auch möglich, dass die Antriebssteuerung 8 im Schritt 205 den Antriebsmotor 16 anstatt des unbedingten Einschaltens für die Mindest-Einschaltzeitspanne Tmin oder im Anschluss an ein lediglich beim erstmaligen Erreichen der Gebrauchsstellung 19 durchgeführtes Einschalten für die Mindest-Einschaltzeitspanne Tmin nur dann und/oder nur solange einschaltet, wenn sich die Zugpartie 17 nicht in der Gebrauchsstellung 19 befindet bzw. bis die Zugpartie 17 die Gebrauchsstellung 19 erreicht hat. Der Schritt 205 kann bei einer sich nur in seltenen Fällen verstellenden Zugpartie 17 sozusagen nur ein Prüfschritt sein, bei dem ermittelt wird, ob sich die Zugpartie 17 noch in der Gebrauchsstellung 19 befindet.

Es versteht sich, dass das Verfahren 200 sinngemäß auch für ein Bewegen und Halten der Zugpartie 17 in der Ruhestellung 18 (Bewegungsrichtung 45 des Antriebsmotor 16) sowie in jeder zwischen der Gebrauchsstellung 19 und der Ruhestellung 18 vorgebbaren (Zwischen-)Stellung der Zugpartie 17 angewendet werden kann, wobei der Schritt 205 vorliegend in Bezug auf die Zwischen-Stellungen eine Prüfung enthält, ob sich die Zugpartie 17 noch in der jeweils gewünschten ZwischenStellung befindet, sofern für die Zwischen-Stellungen kein Anschlag vorgesehen ist.

Insbesondere im Zusammenhang mit Zugpartie-Stellungen, für die kein Anschlag vorgesehen ist, kann es erforderlich sein, dass die jeweilige Stellung durch die Antriebssteuerung 8 interpolierend "angefahren" wird, d.h. dass die Antriebssteuerung 8 dem Antriebsmotor 16 jeweils eine Drehrichtungsumkehr vorgibt, falls die Zugpartie 17 zuvor über die gewünschte Stellung hinaus bewegt worden ist.

Bei der Antriebssteuerung 8 ist ein Merker für die Drehrichtung des Antriebsmotors 16 und somit die Bewegungsrichtung der Zugpartie 17 zu der jeweils zuletzt gewünschten Zugpartie-Stellung vorgesehen.

In dem Verfahren 200 wird die Gebrauchsstellung 19 zyklisch in von der Antriebssteuerung 8 selbst überwachten Intervallen fester Länge T überprüft. Zum einen könnte die Länge der Intervalle von der Antriebssteuerung 8 adaptiv eingestellt werden, beispielsweise in Abhängigkeit von der jeweiligen Fahrsituation und/oder der jeweiligen einzuhaltenden Zugpartie-Stellung. Beispielsweise könnte die Intervalldauer beim Halten der Zugpartie 17 in der Ruhestellung 18 kürzer sein als beim Halten in der Gebrauchsstellung 19. Zum andern könnte die Intervalldauer extern, z.B. durch eine zentrale Steuerung und/oder Fahrdynamikregelung des Zugfahrzeugs 9, einstellbar sein. Diese würde dann beispielsweise der Antriebssteuerung 8 jeweils einen Befehl zum wiederholten Ansteuern der Antriebsmotoranordnung 25 zu einer zur jeweiligen Zugpartie-Stellung gerichteten Bewegungsrichtung senden.

Die Steuermittel 11 leisten vorliegend auch Funktionen von Sperrmitteln, mit denen verhinderbar ist, dass die Zugpartie 17 bei angekuppeltem Anhänger 13 sowohl im Stillstand des Zugfahrzeugs 9 als auch bei dessen Fahrbetrieb aus der Gebrauchsstellung 19 herausbewegt wird. Die Steuermittel 11 wirken auf die durch die Antriebssteuerung 8 bedienten Steuerleitungen 28, 29 und verhindern auf diese Weise bei angekuppeltem Anhänger 13 eine Ansteuerung des Antriebsmotors 16 zu einer Bewegung der Zugpartie 17 in Richtung der Ruhestellung 18, die beispielsweise durch eine Fehlbedienung des Schalters 27 hervorgerufen wird.

Die Sperrfunktion der Steuermittel 11 wird aktiviert, wenn die Anhängerkupplung 10 durch den Anhänger 13 genutzt wird. Dies ermittelt die Antriebssteuerung 8 vorliegend aus der Nutzung des Versorgerkontakts 15 durch den Anhänger 13, die die Erfassungsmittel 12, vorliegend die Sensoranordnung 39 und/oder die Versorgerkontakt-Erfassungsmittel 14, melden.

Durch eine Erfassung, ob die Anhängerkupplung 10 durch den Anhänger 13 genutzt wird, könnte auch das wiederholte Ansteuern der Antriebsmotoranordnung 25 gesteuert werden. Dabei könnte die Antriebssteuerung 8 das wiederholte Ansteuern der Antriebsmotoranordnung 25 beispielsweise solange betreiben, wie ihr die Erfassungsmittel 12, vorliegend die Sensoranordnung 39 und/oder die Versorgerkontakt-Erfassungsmittel 14, die Nutzung des Versorgerkontakt 15 durch den Anhänger melden.

Varianten der Erfindung sind ohne Weiteres möglich:

Die gezeigte Antriebsmotoranordnung 25 enthält zwar nur den als Schwenk-Antrieb dienenden Antriebsmotor 16. Prinzipiell könnte jedoch auch eine Antriebsmotoranordnung mit mehreren Antriebsmotoren vorgesehen sein, beispielsweise einem zusätzlichen Hub- und/oder Dreh-Antriebsmotor, wobei letzterer beispielsweise eine Drehbewegung der Zugpartie 17 ermöglicht, so dass diese in Gebrauchsstellung in Fahrtrichtung und in Ruhestellung quer dazu angeordnet ist. Dabei sind prinzipiell beliebige, durch die jeweilige Antriebsmotoranordnung sowie gegebenenfalls vorgesehene Getriebe, Umlenkmechanismen und dergleichen bewirkte Bewegungsabläufe der Zugpartie möglich. Jedenfalls steuert eine jeweils zugeordnete, erfindungsgemäße Antriebssteuerung die Antriebsmotoranordnung in zeitlichen Wiederhol-Intervallen zu einer zur jeweils gewünschten Zugpartie-Stellung gerichteten Bewegungsrichtung wiederholt derart an, dass die jeweilige Zugpartie-Stellung sicher eingehalten wird. Dabei kann lediglich ein Antriebsmotor, gegebenenfalls können auch mehrere Antriebsmotoren sequentiell und/oder synchron angesteuert werden, wobei für jeden Antriebsmotor ein individuelles Wiederhol-Intervall vorgesehen sein kann.

Die obigen Ausführungen beziehen sich auf eine Antriebsmotoranordnung mit einem oder mehreren elektrischen Antriebsmotoren. Es versteht sich, dass prinzipiell auch andere Antriebsarten möglich sind, beispielsweise hydraulische oder fluidische, z.B. pneumatische, Antriebe.

Die Sensoranordnung 39 könnte außerhalb des Steckers 43 angeordnet sein, beispielsweise im Heckbereich des Zugfahrzeugs 9, wobei allerdings gewährleistet sein muss, dass sich der Stecker 43 und/oder ein sonstiges erfassbares Teil des Anhängers 13 im Erfassungsbereich des Sensors 43 befindet, wenn der Anhänger 13 an die Zugpartie 17 angekoppelt ist.

Ferner könnte die Sensoranordnung 39 durch eine nicht gezeigte Schutzklappe betätigt werden, die beweglich an dem Versorgerkontakt 15 angelenkt ist und bei in den Versorgerkontakt 15 eingestecktem Stecker 43, also genutztem Versorgerkontakt 15, aufgeklappt ist.

Die Versorgerkontakt-Erfassungsmittel 14 könnten dafür vorgesehen sein, eine durch Einstecken des Steckers 43 in den Versorgerkontakt 15 bewirkte Deaktivierung einer am Zugfahrzeug 9 angeordneten, einen zugfahrzeugseitigen Verbraucher bildenden, nicht dargestellten Nebelschlussleuchte zu erfassen.

Der Intervallwert T könnte der Antriebssteuerung 8 vorgegeben werden, beispielsweise von einer in dem Zugfahrzeug 9 vorgesehenen, nicht dargestellten Fahrdynamikregelung. Diese oder eine sonstige Steuerung des Zugfahrzeugs 9 könnte bei der Antriebssteuerung 8 auch das wiederholte Ansteuern der Antriebsmotoranordnung 25 aktivieren und/oder deaktivieren. Beispielsweise könnte bei Stillstand des Zugfahrzeugs 9 das wiederholte Ansteuern unterbleiben.

Die Ausgestaltung und der Umfang der Erfassungsmittel 12 sind lediglich beispielhaft zu verstehen. Beispielsweise könnten lediglich die Motorstrom-Erfassungsmittel 50 vorgesehen sein.

Es ist auch möglich, dass die Sensoranordnung 34 und/oder die Motorstrom-Erfassungsmittel 50 Drehzahlerfassungsmittel enthalten, die z.B. an dem Getriebe 23 und/oder an der Antriebsmotoranordnung 25 angeordnet sind. Beispielsweise könnte ein an dem Antriebsmotor 16 oder dem Getriebe 23 angeordneter Drehzahlgeber, der z.B. bei einer Motorumdrehung des Antriebsmotors 16 eine vorbestimmte Anzahl von Impulsen erzeugt, z.B. ein Magnetimpulsgeber, mit den Steuermitteln 11 verbunden sein. Die Steuermittel 11 würden dann beim Bewegen der Zugpartie 17 von der Ruhestellung 18 in die Gebrauchsstellung 19 und umgekehrt anhand der von dem Drehzahlgeber gemeldeten Anzahl von Impulsen ermitteln, ob die Zugpartie 17 die jeweils anzufahrende Ruhestellung 18 oder Gebrauchsstellung 19 bereits erreicht hat und die Antriebsmotoranordnung 25 bei Erreichen der Ruhestellung 18 oder Gebrauchsstellung 19 jeweils abschalten, so dass die Drehzahlerfassungsmittel sozusagen zur Endabschaltung der Antriebsmotoranordnung 25 dienen.

Wenn sich die Zugpartie 17 aus der Ruhestellung 18 oder der Gebrauchsstellung 19 herausbewegt - auch bei abgeschalteter Antriebsmotoranordnung 25 - senden die Drehzahlerfassungsmittel an die Steuermittel 11 entsprechende Meldesignale, z.B. Drehzahlimpulse, so dass diese das Verlassen der Ruhestellung 18 oder der Gebrauchsstellung 19 ermitteln können und gegebenenfalls die Antriebsmotoranordnung 25 derart ansteuern können, dass die Zugpartie 17 wieder in die Ruhestellung 18 oder Gebrauchsstellung 19 bewegt wird.

Ferner könnten die Motorstrom-Erfassungsmittel 50 und die Drehzahlerfassungsmittel vorteilhaft zusammenwirken, wobei die Steuermittel 11 anhand der von den Drehzahlerfassungsmittel gemeldeten Informationen ermitteln, ob die Zugpartie 17 sich in der Nähe der Ruhestellung 18 oder der Gebrauchsstellung 19, wo zu einem sicheren Erreichen der jeweiligen Stellung für den Antriebsmotor 16 ein höherer Motorstrom zulässig ist, oder auf einem Abschnitt des dazwischen befindlichen Verstellweges befindet, wo die Steuermittel 11 einen vergleichsweise niedrigen Motorstrom erlauben, so dass Beschädigungen vermieden werden, falls die Zugpartie 17 auf dem Verstellweg mit einem Hindernis kollidiert.

## Patentansprüche

1. Antriebssteuerung für eine Antriebsmotoranordnung (25) einer Anhängerkupplung (10) mit einer Zugpartie (17) zum Ankuppeln eines Anhängers (13) an ein Zugfahrzeug (9), mit Steuermitteln (11) zum Steuern der Antriebsmotoranordnung (25) derart, dass die Zugpartie (17) durch die Antriebsmotoranordnung (25) in zumindest eine vorgebbare Zugpartie-Stellung (18, 19) bewegbar ist, **dadurch gekennzeichnet, dass** die Steuermittel (11) zur Kompensation eines unbeabsichtigten Verstellens der Zugpartie (17) zu einem automatischen, in zeitlichen Intervallen (T) wiederholten Ansteuern der Antriebsmotoranordnung (25) zu einer zu der mindestens einen vorgebbaren Zugpartie-Stellung (18, 19) gerichteten Bewegungsrichtung (45, 44) ausgestaltet sind.

2. Antriebssteuerung nach Anspruch 1, **dadurch gekennzeichnet, dass** die Steuermittel (11) derart ausgestaltet sind, dass sie bei dem wiederholten Ansteuern der Antriebsmotoranordnung (25) diese jeweils solange einschalten können, bis die Zugpartie (17) die mindestens eine vorgebbare Zugpartie-Stellung (18, 19) erreicht hat.

3. Antriebssteuerung nach Anspruch 1 oder 2, **dadurch gekennzeichnet, dass** die Steuermittel (11) zu einem Einschalten der Antriebsmotoranordnung (25) jeweils für eine vorbestimmte Mindest-Einschaltzeitspanne bei dem wiederholten Ansteuern der Antriebsmotoranordnung (25) ausgestaltet sind.

4. Antriebssteuerung nach einem der Ansprüche 1 bis 3, **dadurch gekennzeichnet, dass** den Steuermitteln (11) die Länge der zeitlichen Intervalle (T) vorgebbar ist.

5. Antriebssteuerung nach einem der vorhergehenden Ansprüche, **dadurch gekennzeichnet, dass** ihr Erfassungsmittel (12) zum Erfassen, ob die Zugpartie (17) die mindestens eine vorgebare Zugpartie-Stellung (18, 19) erreicht hat, zugeordnet sind und/oder dass die Erfassungsmittel (12) einen Bestandteil von ihr bilden.

6. Antriebssteuerung nach einem der vorhergehenden Ansprüche, **dadurch gekennzeichnet, dass** den Steuermitteln (11) das automatische, in zeitlichen Intervallen (T) wiederholte Ansteuern der Antriebsmotoranordnung (25) vorgebbar ist, insbesondere durch einen Befehl für die Antriebssteuerung, die Zugpartie (17) in die mindestens eine vorgebbare Zugpartie-Stellung (18, 19) zu bewegen.

7. Antriebssteuerung nach einem der vorhergehenden Ansprüche, **dadurch gekennzeichnet, dass** die Steuermittel (11) derart ausgestaltet sind, dass sie mit dem wiederholten Ansteuern der Antriebsmotoranordnung (25) nach einer vorbestimmten Zeitspanne (Twa) nach dem erstmaligen Erreichen der mindestens einen vorgebbaren Zugpartie-Stellung (18, 19) beginnen können.

8. Antriebssteuerung nach einem der vorhergehenden Ansprüche, **dadurch gekennzeichnet, dass** die Steuermittel (11) derart ausgestaltet sind, dass sie zumindest nach dem erstmaligen Erreichen der mindestens einen vorgebbaren Zugpartie-Stellung (18, 19) die Antriebsmotoranordnung (25) für eine vorbestimmte Mindest-Einschaltzeitspanne (Tmin) einschalten können.

9. Antriebssteuerung nach einem der vorhergehenden Ansprüche, **dadurch gekennzeichnet, dass** sie für eine Anhängerkupplung (10) vorgesehen ist, bei der die mindestens eine vorgebbare Zugpartie-Stellung (18, 19) durch mindestens einen Anschlag (24) definiert ist.

10. Antriebssteuerung nach Anspruch 9, **dadurch gekennzeichnet, dass** die Erfassungsmittel (12) zu einem Erfassen ausgestaltet sind, ob die Zugpartie (17) den mindestens einen Anschlag (24) erreicht hat.

11. Antriebssteuerung nach einem der Ansprüche 5 bis 10, **dadurch gekennzeichnet, dass** die Erfassungsmittel (12) eine Sensoranordnung zum Erfassen der mindestens einen Zugpartie-Stellung (18, 19) aufweisen.

12. Antriebssteuerung nach Anspruch 11, **dadurch gekennzeichnet, dass** die Sensoranordnung mindestens einen elektro-mechanischen Schalter und/oder induktiven Sensor und/oder kapazitiven Sensor und/oder Reed-Kontakt und/oder eine Lichtschranke und/oder Drehzahlerfassungsmittel aufweist.

13. Antriebssteuerung nach einem der Ansprüche 5 bis 12, **dadurch gekennzeichnet, dass** die Erfassungsmittel (12) zur Erfassung einer Information über mindestens einen Motorstrom ausgestaltet sind, der zumindest einen Antriebsmotor der Antriebsmotoranordnung (25) beim Erreichen der mindestens einen vorgebbaren Zugpartie-Stellung (18, 19) durchfließt.

14. Antriebssteuerung nach einem der Ansprüche 5 bis 13, **dadurch gekennzeichnet, dass** die Erfassungsmittel (12) zu einer Erfassung, ob mindestens ein der Anhängerkupplung (10) zugeordneter elektrischer Versorgerkontakt (15) durch den Anhänger (13) genutzt wird, ausgestaltet sind.

15. Antriebssteuerung nach Anspruch 14, **dadurch gekennzeichnet, dass** die Steuermittel (11) derart ausgestaltet sind, dass eine Ansteuerung des mindestens einen Antriebsmotors (25) zu einer die mindestens eine vorgebbare Zugpartie-Stellung (18, 19) verlassenden Bewegung der Zugpartie (17) verhinderbar ist, wenn die Erfassungsmittel (12) eine Nutzung des mindestens einen elektrischen Versorgerkontakts (15) durch den Anhänger (13) melden.

16. Antriebssteuerung nach einem der vorhergehenden Ansprüche, **dadurch gekennzeichnet, dass** die mindestens eine vorgebbare Zugpartie-Stellung (18, 19) eine Ruhestellung (18) und/oder eine Gebrauchsstellung (19) der Zugpartie (17) umfasst.

17. Antriebssteuerung nach einem der vorhergehenden Ansprüche, **dadurch gekennzeichnet, dass** die Steuermittel (11) zu einem Einschalten zumindest eines Antriebsmotors der Antriebsmotoranordnung (25) und/oder zu einem sequentiellen und/oder synchronen Einschalten mehrerer Antriebsmotoren der Antriebsmotoranordnung (25) bei dem wiederholten Ansteuern der Antriebsmotoranordnung (25) ausgestaltet sind.

18. Antriebssteuerung nach einem der vorhergehenden Ansprüche, **dadurch gekennzeichnet, dass** sie als ein Programm-Modul ausgebildet ist und Programmcode aufweist, der durch eine zur Steuerung der Antriebsmotoranordnung (25) und/oder der Anhängerkupplung (10) vorgesehene Prozessoranordnung ausgeführt werden kann.

19. Anhängerkupplung mit einer durch eine Antriebsmotoranordnung (25) in zumindest eine vorgebbare Zugpartie-Stellung (18, 19) bewegbaren Zugpartie (17) zum Ankuppeln eines Anhängers (13) an ein Zugfahrzeug (9) und mit einer Antriebssteuerung (8) nach einem der vorhergehenden Ansprüche zum Steuern der Antriebsmotoranordnung (25).

20. Anhängerkupplung nach Anspruch 19, **dadurch gekennzeichnet, dass** bei der Antriebsmotoranordnung (25) Blockiermittel (23) vorgesehen sind, insbesondere ein selbsthemmendes Getriebe, zum Verhindern einer Bewegung der Zugpartie (17) in Richtung aus der mindestens einen vorgebbaren Zugpartie-Stellung (18, 19) bei nicht aktivierter Antriebsmotoranordnung (25).

21. Kraftfahrzeug mit einer Anhängerkupplung (10) nach Anspruch 19 oder 20 oder mit einer Antriebssteuerung (8) nach einem der Ansprüche 1 bis 18 zum Steuern der Antriebsmotoranordnung (25).

## Claims

1. Drive control unit for a drive motor assembly (25) of a trailer coupling (10) with a towing section (17) for coupling a trailer (13) to a towing vehicle (9), with control means (11) for controlling the drive motor assembly (25) in such a way that the towing section (17) is movable by the drive motor assembly (25) into one or more towing section positions (18, 19), **characterised in that** the control means (11), to compensate for accidental adjustment of the towing section (17), are designed for automatic driving of the drive motor assembly (25), at repeated intervals of time (T), to a direction of movement (45, 44) directed to at least one presettable towing section position (18,19).

2. Drive control unit according to claim 1, **characterised in that** the control means (11) are so designed that, during the repeated driving of the drive motor assembly (25), they are able to switch on the latter for sufficient length of time for the towing section (17) to reach at least one of the presettable towing section positions (18, 19).

3. Drive control unit according to claim 1 or 2, **characterised in that** the control means (11) are designed for switching on the drive motor assembly (25) in each case for a predetermined minimum switch-on period during the repeated driving of the drive motor assembly (25).

4. Drive control unit according to any of claims 1 to 3, **characterised in that** the length of the intervals of time (T) is presettable by the control means (11).

5. Drive control unit according to any of the preceding claims, **characterised in that** it is assigned detection means (12) to detect whether the towing section (17) has reached at least one presettable towing section position (18, 19), and/or that the detection means (12) form an integral part of it.

6. Drive control unit according to any of the preceding claims, **characterised in that** the control means (11) are able to preset the automatic driving of the drive motor assembly (25) repeated at intervals of time (T), in particular through a command for the drive control unit to move the towing section (17) into one of the presettable towing section positions (18, 19).

7. Drive control unit according to any of the preceding claims, **characterised in that** the control means (11) are so designed that they are able to commence the repeated driving of the drive motor assembly (25) following a predetermined period of time (Twa) after one of the presettable towing section positions (18, 19) has been reached for the first time.

8. Drive control unit according to any of the preceding claims, **characterised in that** the control means (11) are so designed that they are able to switch on the drive motor assembly (25) for a predetermined minimum switch-on period (Tmin) at least after the first time of reaching one of the presettable towing section positions (18, 19).

9. Drive control unit according to any of the preceding claims, **characterised in that** the unit is provided for a trailer coupling (10) in which the one or more presettable towing section positions (18, 19) is or are defined by one or more stops (24).

10. Drive control unit according to claim 9, **characterised in that** the detection means (12) are designed to detect whether or not the towing section (17) has reached one of the stops (24).

11. Drive control unit according to any of claims 5 to 10, **characterised in that** the detection means (12) have a sensor array to detect the one or more towing section positions (18, 19).

12. Drive control unit according to claim 11, **characterised in that** the sensor array has at least one electro-mechanical switch and/or inductive sensor and/or capacitive sensor and/or reed contact and/or photoelectric switch and/or speed detection means.

13. Drive control unit according to any of claims 5 to 12, **characterised in that** the detection means (12) are designed to collect information regarding one or more motor currents which flow through one or more drive motors of the drive motor assembly (25) on reaching one of the presettable towing section positions (18, 19).

14. Drive control unit according to any of claims 5 to 13, **characterised in that** the detection means (12) are designed to detect whether or not a supply contact (15) assigned to the trailer coupling (10) is being used by the trailer (13).

15. Drive control unit according to claim 14, **characterised in that** the control means (11) are so designed that driving of the drive motor or motors (25) to a movement of the towing section (17) away from one of the presettable towing section positions (18, 19) may be prevented if the detection means (12) report use of one or more electrical supply contacts (15) by the trailer (13).

16. Drive control unit according to any of the preceding claims, **characterised in that** the presettable towing section position or positions (18, 19) include an idle position (18) and/or a position of use (19) of the towing section (17).

17. Drive control unit according to any of the preceding claims, **characterised in that** the control means (11) are designed for switching-on of one or more drive motors of the drive motor assembly (25) and/or for sequential and/or synchronous switching-on of several drive motors of the drive motor assembly (25) during the repeated driving of the drive motor assembly (25).

18. Drive control unit according to any of the preceding claims, **characterised in that** it is in the form of a program module and has program code which may be executed by a processor assembly provided for control of the drive motor assembly (25) and/or the trailer coupling (10).

19. Trailer coupling with a towing section (17) movable by means of a drive motor assembly (25) into one or more presettable towing section positions (18, 19) for the coupling of a trailer (13) to a towing vehicle (9) and with a drive control unit (8) according to any of the preceding claims for the control of the drive motor assembly (25).

20. Trailer coupling according to claim 19, **characterised in that** the drive motor assembly (25) is provided with blocking means (23), in particular an irreversible gear, to prevent any movement of the towing section (17) away from one of the presettable towing section positions (18, 19) when the drive motor assembly (25) is not activated.

21. Motor vehicle with a trailer coupling (10) according to claim 19 or 20 or with a drive control unit (8) according to one of claims 1 to 18 for the control of the drive motor assembly (25).

## Revendications

1. Commande d'entraînement pour un agencement de moteurs d'entraînement (25) d'un attelage de remorque (10) avec une partie de traction (17) pour atteler une remorque (17) à un véhicule tracteur (9), avec des moyens de commande (11) pour commander l'agencement de moteurs d'entraînement (25) de manière que la partie de traction (17) soit déplaçable par l'agencement de moteurs d'entraînement (25) dans au moins une position prédéfinie de partie de traction (18, 19), **caractérisée en ce que**, pour compenser un déplacement involontaire de la partie de traction (17), les moyens de commande (11) sont conçus pour une commande automatique, renouvelée à intervalles de temps (T), de l'agencement de moteurs d'entraînement (25), dans une direction de mouvement (45, 44) orientée vers la au moins une position prédéfinie de partie de traction (18, 19).

2. Commande d'entraînement selon la revendication 1, **caractérisée en ce que** les moyens de commande (11) sont conçus de manière que, lors de la commande répétée de l'agencement de moteurs d'entraînement (25), ceux-ci puissent être enclenchés jusqu'à ce que la partie de traction (17) atteigne la au moins une position prédéfinie de partie de traction (18, 19).

3. Commande d'entraînement selon la revendication 1 ou 2, **caractérisée en ce que** les moyens de commande (11) sont conçus pour une mise en marche de l'agencement de moteurs d'entraînement (25), dans chaque cas pour un intervalle de temps minimal de mise en marche prédéterminée lors de la commande répétée de l'agencement de moteurs d'entraînement (25).

4. Commande d'entraînement selon l'une des revendications 1 à 3, **caractérisée en ce qu'**il est possible d'imposer aux moyens de commande (11) la longueur de l'intervalle de temps (T).

5. Commande d'entraînement selon l'une des revendications précédentes, **caractérisée en ce que** lui sont associés des moyens de détection (12) pour détecter si la partie de traction (17) a atteint la au moins une position prédéfinie de partie de traction (18, 19), et/ou **en ce que** les moyens de détection (12) forment partie intégrante de celle-ci.

6. Commande d'entraînement selon l'une des revendications précédentes, **caractérisée en ce qu'**il est possible d'imposer aux moyens de commande (11) la commande automatique, renouvelée à intervalles de temps (T), de l'agencement de moteurs d'entraînement (25), en particulier par une instruction destinée à la commande d'entraînement, de déplacer la partie de traction (17) dans la au moins une position prédéfinie de partie de traction (18, 19).

7. Commande d'entraînement selon l'une des revendications précédentes, **caractérisée en ce que** les moyens de commande (11) sont conçus de manière qu'ils puissent commencer avec la commande renouvelée de l'agencement de moteurs d'entraînement (25), après un laps de temps prédéterminé (Twa), après qu'a été atteinte pour la première fois la au moins une position prédéfinie de partie de traction (18, 19).

8. Commande d'entraînement selon l'une des revendications précédentes, **caractérisée en ce que** les moyens de commande (11) sont conçus de manière à pouvoir mettre en marche, au moins après qu'a été atteinte pour la première fois la au moins une position prédéfinie de partie de traction (18, 19), l'agencement de moteurs d'entraînement (25) pour un intervalle de temps minimum de mise en marche (Tmin) prédéterminé.

9. Commande d'entraînement selon l'une des revendications précédentes, **caractérisée en ce qu'**elle est prévue pour un attelage de remorque (10) dans lequel la au moins une position prédéfinie de partie de traction (18, 19) est définie par au moins une butée (24).

10. Commande d'entraînement selon la revendication 9, **caractérisée en ce que** les moyens de détection (12) sont conçus pour détecter si la partie de traction (17) a atteint la au moins une butée (24).

11. Commande d'entraînement selon l'une des revendications 5 à 10, **caractérisée en ce que** les moyens de détection (12) comportent un dispositif de détection pour détecter la au moins une position de partie de traction (18, 19).

12. Commande d'entraînement selon la revendication 11, **caractérisée en ce que** le dispositif de détection comporte au moins un interrupteur électromécanique et/ou un capteur inductif et/ou un capteur capacitif et/ou un contact Reed et/ou une barrière lumineuse et/ou des moyens de détection de la vitesse de rotation.

13. Commande d'entraînement selon l'une des revendications 5 à 12, **caractérisée en ce que** les moyens de détection (12) sont conçus pour détecter une information relative à au moins un courant du moteur, qui traverse au moins un moteur d'entraînement de l'agencement de moteurs d'entraînement (25) lorsqu'est atteinte la au moins une position prédéfinie de partie de traction (18, 19).

14. Commande d'entraînement selon l'une des revendications 5 à 13, **caractérisée en ce que** les moyens de détection (12) sont conçus pour détecter si au moins un contact électrique d'alimentation (15), associé à l'attelage de remorque (10), est utilisé par la remorque (13).

15. Commande d'entraînement selon la revendication 14, **caractérisée en ce que** les moyens de commande (11) sont conçus de manière à pouvoir empêcher une commande du au moins un moteur d'entraînement (25) en un mouvement de la partie de traction (17), provoquant la au moins une position prédéfinie de partie de traction (18, 19), lorsque les moyens de détection (12) signalent une utilisation du au moins un contact d'alimentation électrique (15) par la remorque (13).

16. Commande d'entraînement selon l'une des revendications précédentes, **caractérisée en ce que** la au moins une position prédéfinie de partie de traction (18, 19) comprend une position de repos (18) et/ou une position d'utilisation (19) de la partie de traction (17).

17. Commande d'entraînement selon l'une des revendications précédentes, caractérisée en ce les moyens de commande (11) sont conçus pour mettre en marche au moins un moteur d'entraînement de l'agencement de moteurs d'entraînement (25) et/ou pour mettre en marche de manière séquentielle et/ou synchrone plusieurs moteurs d'entraînement de l'agencement de moteurs d'entraînement (25) lors de la commande renouvelée de l'agencement de moteurs d'entraînement (25).

18. Commande d'entraînement selon l'une des revendications précédentes, **caractérisée en ce qu'**il est réalisé comme un module de programme et présente un code de programme qui peut être exécuté par un agencement de processus prévu pour la commande de l'agencement de moteurs d'entraînement (25) et/ou de l'attelage de remorque (10).

19. Attelage de remorque avec une partie de traction (17), déplaçable par un agencement de moteurs d'entraînement (25) dans au moins une position de partie de traction prédéfinie (18, 19), pour l'attelage d'une remorque (13) à un véhicule tracteur (9) et avec une commande d'entraînement (8) selon l'une des revendications précédentes, pour commander l'agencement de moteurs d'entraînement (25).

20. Attelage de remorque selon la revendication 19, **caractérisé en ce que** dans l'agencement de moteurs d'entraînement (25) sont prévus des moyens de blocage (23), en particulier une transmission à autoblocage, pour empêcher un mouvement de la partie de traction (17) dans une direction depuis la au moins une position prédéfinie de partie de traction (18, 19), lorsque l'agencement de moteurs d'entraînement (25) n'est pas activé.

21. Véhicule automobile avec un attelage de remorque (10) selon la revendication 19 ou 20, ou avec une commande d'entraînement (8) selon l'une des revendications 1 à 18, pour commander l'agencement de moteurs d'entraînement (25).
